# EUROPEAN PATENT APPLICATION

(11) **EP 3 587 149 A1**
(43) Date of publication of application: **01.01.2020**
(21) Application number: 19182472.1
(22) Date of filing: 26.06.2019
(51) Int. Cl.: B60D 5/00, B62D 53/08, B62D 47/02

(54) **ARTICULATED VEHICLE AND METHOD**

(30) Priority: 29.06.2018 SE 1850812
(71) Applicant: Scania CV AB, 151 87 Södertälje (SE)
(72) Inventor: SANDBERG, Jesper, 141 32 Huddinge (SE); HAGLUND MALM, Johan, 170 70 Solna (SE)
(74) Representative: Scania CV AB

(57) **Abstract**

Herein an articulated vehicle (2) comprising a front chassis (4) and a rear chassis (6) is disclosed. A damping device (16) is connected between the front and rear chassis (4, 6). A control unit (20) is configured to control the damping device (16) based on first measurement data from a first angle measuring arrangement (18). The control unit (20) is further configured to control the damping device (16) based on second measurement data from a second angle measuring arrangement (28).

## Description

### TECHNICAL FIELD

The invention relates to an articulated vehicle and to a method for controlling a damping device of an articulated vehicle. The invention further relates to a computer program causing a computer to carry out a method for controlling a damping device of an articulated vehicle, and to a computer-readable storage medium comprising instructions causing a computer to carry out a method for controlling a damping device of an articulated vehicle.

### BACKGROUND

An articulated vehicle comprises a front chassis comprising a first wheel axis and a rear chassis comprising a second wheel axis. The front chassis is pivotably connected to the rear chassis. A damping device is connected between the front and rear chassis. The damping device may comprise e.g. a hydraulic damping cylinder.

The damping device prevents the articulated vehicle from becoming unstable, such as e.g. the front and/or rear chassis swinging in relation to each other without correlation to the track the articulated vehicle is following. Such damping may be necessary especially at higher vehicle speeds. The damping device may be controlled based on angle measurements and angular velocity between the front and rear chassis. These measurements may be obtained by means of an angle sensor arranged between the front and rear chassis. A control unit controls the amount of damping provided by the damping device.

Safe driving of an articulated vehicle dependents inter alia on that the damping device operates properly. If the angle sensor should become faulty and provide inaccurate angle measurements, the articulated vehicle may only be driven at a limited speed and requires immediate service.

EP 1010608 discloses a hydraulic system for damping the motion of rotation of a swivel joint between two vehicle parts of an articulated vehicle, such as an articulated bus. In such a hydraulic system a proportional pressure control valve is provided and arranged between the force side and the suction side of a dampening unit, e.g. a double-acting hydraulic cylinder. Such a proportional pressure control valve increases the flow resistance of the hydraulic medium. The consequence thereof is that the motion of the joint is damped, particularly in a curve. Such a damping of the motion of rotation of the two joint members relative to one another is necessary, since otherwise the vehicle is difficult to control. Also, oscillations of the vehicle may build up on a straight but uneven stretch of road. EP 1010608 proposes a hydraulic system that maintains the controllability of the vehicle even in case the electric installation of a vehicle and with it the damping effect on the motion of rotation of the two joint members of a joint relative to one another should break down. In addition to the proportional pressure control valve, a mechanical pressure limiting valve is provided in a line between the suction and pressure sides of the dampening unit. The mechanical pressure control valve may be adjusted to a predetermined minimum pressure which determines the degree of the damping.

### SUMMARY

It would be advantageous to achieve an articulated vehicle overcoming, or at least alleviating, at least some of the above mentioned drawbacks. In particular, it would be desirable to enable operation of a damping device of an articulated vehicle in case of angle sensor rupture. To better address one or more of these concerns, an articulated vehicle having the features defined in one of the independent claims is provided. Moreover, one or more of these concerns are also addressed by a method for controlling a damping device of an articulated vehicle, the method having features and steps defined in one of the independent claims.

According to an aspect there is provided an articulated vehicle comprising a front chassis comprising a first wheel axis, a rear chassis comprising a second wheel axis, a damping device, a first angle measuring arrangement, and a control unit. The front chassis is pivotably connected to the rear chassis. The damping device is connected between the front and rear chassis. The first angle measuring arrangement is configured for determining first measurement data. The control unit is configured to control the damping device based on the first measurement data. The articulated vehicle comprises a second angle measuring arrangement configured for determining second measurement data, wherein the second angle measuring arrangement is separate from the first angle measuring arrangement, and wherein the control unit is configured to control the damping device based on the second measurement data.

Since the articulated vehicle comprises a second angle measuring arrangement configured for determining second measurement data, since the second angle measuring arrangement is separate from the first angle measuring arrangement, and since the control unit is configured to control the damping device based on the second measurement data, the damping device is controllable based on the second measurement data from the second angle measuring arrangement. Accordingly, if the first angle measuring arrangement should rupture, the control unit instead controls the damping device utilising the second angle measuring arrangement and control of the damping device is maintained. Thus, the articulated vehicle may be safely driven also in case of rupture of the first angle measuring arrangement.

The invention is based around the realisation that various sensors of an articulated vehicle may be utilised to determine angular data such as an angle, an angular velocity, an angular acceleration between a front chassis and a rear chassis of the articulated vehicle, even though such sensors are not configured to determine angular data as such. Thus, in case of rupture of a dedicated angular sensor, i.e. the first angle measuring arrangement, arranged for determining angular data between the front and rear chassis of the articulated vehicle, angular data may instead be calculated from data provided by one or more other sensors, i.e. the second angle measuring arrangement, of the articulated vehicle. Accordingly, the second angle measuring arrangement determines indirect angular data.

The articulated vehicle may for instance be an articulated bus. Suitably, the front and rear chassis are permanently connected to each other. That is, the front and rear chassis are not intended to be separated from each other during operation of the articulated vehicle. Put differently, a specific front chassis is always connected to a specific rear chassis. This is in contrast with tractor - trailer combinations, wherein the tractor hauls many different trailers during the operation of the tractor.

The articulated vehicle may comprise one or more further wheel axes than the first and second wheel axes.

The damping device is configured to provide a pivoting resistance between the front and rear chassis. That is, without the damping device, the front and rear chassis are more easily pivoted in relation to each other than with the damping device connected between the front and rear chassis. The damping device may be a passive damping device, i.e. a damping device which only provides a pivoting resistance. The pivoting resistance is variable, e.g. depending on the setting of a hydraulic valve. In contrast to a passive damping device, an active damping device may apply a pivoting force to the front and rear chassis.

The control of the damping device provided by the control unit may relate to the amount of damping provided by the damping device, i.e. changing the damping resistance of the damping device in a controlled manner. That is, the control unit may control the level of the pivoting resistance between the front and rear chassis provided by the damping device.

The second angle measuring arrangement being separate from the first angle measuring arrangement means that the second angle measuring arrangement provides the second measurement data independently of the first angle measuring arrangement and the first measurement data.

Each of the first and/or second measurement data may comprise a value, a vector, or a matrix. Each of the first and/or second measurement data may comprise data in the form of an actual physical parameter of the articulated vehicle, such as e.g. an angle between front and rear chassis, an angular velocity between front and rear chassis, a vehicle speed, a wheel speed, etc., as discussed herein. Alternatively, the first and second measurement data may comprise data, which is directly or indirectly related to a physical parameter of the articulated vehicle, such as e.g. a voltage, an inductance, or a resistance of a sensor corresponding to a physical parameter of the articulated vehicle, e.g. an angle, an angular velocity, a speed, etc., as discussed herein.

Herein "determining measurement data" is to be interpreted to cover measuring, and/or calculating, and/or reading one or more physical properties, and optionally providing a representation thereof.

If not mentioned in a particular other context, the terms angle, angular velocity, and angular acceleration herein, relate to the articulation angle, the articulation angular velocity, and the articulation angular acceleration, respectively, between the front and rear chassis of the articulated vehicle.

The first measurement data is transferred to the control unit. For instance, a first signal comprising the first measurement data, or a representation of the first measurement data, is received as a first input signal by the control unit. The first input signal is a signal deriving directly or indirectly from the first angle measuring arrangement. Thus, the first input signal relates to the first measurement data.

According to a non-limiting example, first measurement data may be a voltage provided by the first angle measuring arrangement, which voltage is proportional to an angle between the front and rear chassis. In such case, the first measurement data may relate to specific voltages, which represent specific angles between the first and second chassis, and the first input signal received by the control unit is the voltage supplied by the first angle measuring arrangement. The control unit in turn, may be configured to calculate an angle, and/or an angular velocity, and/or an angular acceleration between the front and rear chassis, or a corresponding parameter or parameters representing such an angle, and/or an angular velocity, and/or an angular acceleration based on the first measurement data. Such calculations are utilised in the control of the damping device.

The second measurement data is transferred to the control unit. For instance, a second signal comprising the second measurement data, or a representation of the second measurement data, is received as a second input signal by the control unit. The second input signal is a signal deriving directly or indirectly from the second angle measuring arrangement. Thus, the second input signal relates to the second measurement data.

According to a non-limiting example, the second measurement data may be image data of the rear chassis provided by the second angle measuring arrangement. In such case, the second measurement data may be image data as such. Moreover, the amount of image area covered by the rear chassis may relate to angular data, e.g. an angle between the front and rear chassis. A processing unit, for instance of the second angle measuring arrangement, may convert the amount of image area covered by the rear chassis into data representing an angle between the front and rear chassis, which is transferred to the control unit. Further, the change in the amount of image area covered by the rear chassis may be converted into second measurement data representing an angular velocity, and/or an angular acceleration between the front and rear chassis. Instead of a processing unit of the second angle measuring arrangement converting the image data, conversion of the image data into angular data may be performed by the control unit.

According to embodiments, the first angle measuring arrangement may comprise an articulation angle sensor, and the first measurement data may represent at least one of an angle, an angular velocity, and/or an angular acceleration. As such, the first angle measuring arrangement may comprise an articulation angle sensor known in the art.

This means that the first measurement data may be an angle, an angular velocity, and/or an angular acceleration as such, or in the form of parameter directly related to at least one of an angle, an angular velocity, and/or an angular acceleration, such as the above exemplified voltage representing an angle between the front and rear chassis.

The angle may be an angle between the front and rear chassis. The angular velocity may be an angular velocity between the front and rear chassis. The angular acceleration may be an angular acceleration between the front and rear chassis. According to some embodiments, the first angle measuring arrangement may provide first measurement data intermittently or continuously to the control unit. The control unit may be configured to calculate angular velocity, and/or the angular acceleration based on the intermittently or continuously provided first measurement data.

Suitably, the second angle measuring arrangement comprises other sensors than an articulation angle sensor. Such other sensors may be sensors present in the articulated vehicle and utilised by systems of the articulated vehicle primarily for other purposes than the damping between the front and rear chassis. Accordingly, at least one of an angle, an angular velocity, and/or an angular acceleration may be determined based on the second measurement data determined by the second angle measuring arrangement, i.e. by such other sensors.

According to embodiments, the second angle measuring arrangement may be configured to determine the second measurement data in the form of at least one of:
a steering wheel angle of the articulated vehicle,
a speed of the articulated vehicle,
an accelerator pedal position of the articulated vehicle,
a wheel speed of a wheel of the articulated vehicle,
GPS data from a GPS receiver of the articulated vehicle,
acceleration data from an accelerometer of the articulated vehicle, and/or
image data from an image capturing device of the articulated vehicle. In this manner, one or more other sensors than an articulation angle sensor may be utilised for determining the second measurement data. Thus, the second angle measuring arrangement may comprise other sensors of the articulated vehicle.

The control unit may be configured to control the damping unit based on the second measurement data from such other sensors of the articulated vehicle. That is, the second measurement data forms part of an indirect representation of e.g. an angle, an angular velocity, and/or an angular acceleration between the front and rear chassis. The control unit may be configured to determine e.g. an angle, an angular velocity, and/or an angular acceleration between the front and rear chassis based on the determined second measurement data.

Further parameters may be utilised together with the second measurement data in order to determine e.g. the angle, the angular velocity, and/or the angular acceleration between the front and rear chassis.

According to some embodiments, the second measurement data may be utilised together with vehicle geometry of the articulated vehicle for determining an articulation angle between the front chassis and the rear chassis. In this manner, at least one of for instance the steering wheel angle, the wheel speed, image data may be utilised for determining e.g. the angle, the angular velocity, and/or the angular acceleration in conjunction with the vehicle geometry.

According to embodiments, the control unit may be configured to control a damping resistance of the damping device. In this manner, the damping resistance of the damping device may be adapted to current driving conditions of the articulated vehicle. The damping resistance of the damping device may be controlled based on the first measurement data provided that the first angle measuring arrangement is properly functioning. If not, the damping resistance of the damping device may be controlled based on the second measurement data provided by the second angle measuring arrangement.

According to a further aspect, there is provided a method for controlling a damping device of an articulated vehicle. The articulated vehicle comprising a front chassis comprising a first wheel axis, a rear chassis comprising a second wheel axis, a first angle measuring arrangement, and a second angle measuring arrangement. The front chassis is pivotably connected to the rear chassis. The damping device is connected between the front and rear chassis. The second angle measuring arrangement is separate from the first angle measuring arrangement. The method comprises steps of:
- determining first measurement data utilising the first angle measuring arrangement,
- controlling the damping device based on the first measurement data, and in the event of failure of the first angle measuring arrangement, performing steps of:
- determining second measurement data utilising the second angle measuring arrangement, and
- controlling the damping device based on the second measurement data.

Since in the event of failure of the first angle measuring arrangement, the method includes the step of determining second measurement data utilising the second angle measuring arrangement, and the step of controlling the damping device based on the second measurement data, the damping device is controllable even if the first angle measuring arrangement should rupture. Thus, the articulated vehicle may be safely driven also in case of rupture of the first angle measuring arrangement.

According to a further aspect, there is provided a computer program comprising instructions which, when the program is executed by a computer, cause the computer to carry out the steps of the method according to any one of aspects and/or embodiments discussed herein.

According to a further aspect, there is provided a computer-readable storage medium comprising instructions which, when executed by a computer, cause the computer to carry out the steps of the method according to any one of aspects and/or embodiments discussed herein.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Figs. 1a and 1b illustrates an articulated vehicle according to embodiments,
Figs. 2a and 2b schematically illustrates main components of embodiments of a system for the control of the pivoting resistance between front and rear chassis of an articulated vehicle,
Figs. 3a and 3b illustrate an articulated vehicle,
Fig. 4 illustrates parameters of an articulated vehicle,
Fig. 5 shows a diagram of wheel speeds of an articulated vehicle,
Figs. 6a and 6b illustrate schematic diagrams of an example control signal provided by a control unit for control of the damping device of an articulated vehicle,
Fig. 7 illustrates embodiments of a method for controlling a damping device of an articulated vehicle, and
Fig. 8 illustrates a computer-readable storage medium in the form of CD-ROM disc.

### DETAILED DESCRIPTION

Aspects and/or embodiments of the invention will now be described more fully. Like numbers refer to like elements throughout. Well-known functions or constructions will not necessarily be described in detail for brevity and/or clarity.

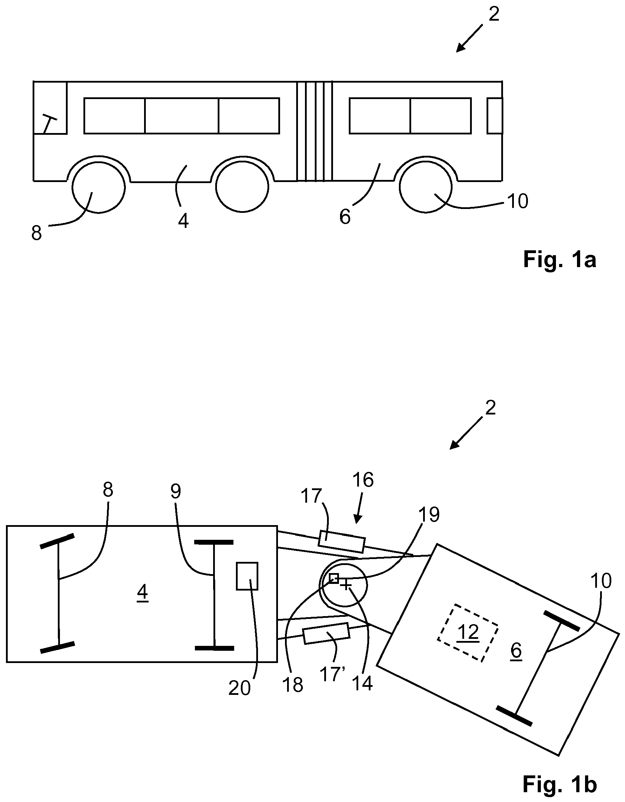

**Figs. 1a and 1b** illustrate an articulated vehicle 2 according to embodiments. **Fig. 1a** shows a side view of the articulated vehicle 2, and **Fig. 1b** shows a schematic top view of the articulated vehicle 2 indicating certain features of the articulated vehicle 2.

The articulated vehicle 2 comprises a front chassis 4 and a rear chassis 6. The front chassis 4 comprises a first wheel axis 8. The rear chassis 6 comprises a second wheel axis 10. In these embodiments, the articulated vehicle 2 comprises a further wheel axis 9. Each of the wheel axes 8, 9, 10 is provided with at least two wheels, one at each lateral side of the articulated vehicle 2. In a known manner, the articulated vehicle 2 comprises a powertrain 12 configured for driving at least one pair of wheels of at least one of the wheel axes 8, 9, 10, such as for instance the second wheel axis 10, i.e. the wheel axis of the rear chassis 6.

In these embodiments, the articulated vehicle 2 is an articulated bus. However, the present invention is not limited to articulated buses, but may be utilised in any articulated vehicle wherein the front and rear chassis are permanently connected to each other, such as e.g. in an articulated wheel loader.

The front chassis 4 is pivotably connected to the rear chassis 6. A pivotable joint 14, which may be of a known kind, provides the pivotable connection between the front and rear chassis 4, 6.

The articulated vehicle 2 further comprises a damping device 16. The damping device 16 is connected between the front and rear chassis 4, 6. That is, the damping device 16 is arranged to damp a pivotable motion between the front and rear chassis 4, 6. More specifically, the damping device 16 affects a pivoting resistance between the front and rear chassis 4, 6.

In these embodiments, the damping device 16 comprises two hydraulic cylinders 17, 17'. If one of the hydraulic cylinders 17, 17' should malfunction, the articulated vehicle 2 may still be driven safely utilising the functioning hydraulic cylinder until the malfunctioning hydraulic cylinder is repaired.

The articulated vehicle 2 further comprises a first angle measuring arrangement 18 and a control unit 20. The control unit 20 is configured to control the damping device 16. That is, the control unit 20 is configured to control a damping resistance of the damping device 16. By controlling the damping resistance of the damping device 16, the pivoting resistance between the front and rear chassis 4, 6 is controlled. Since the pivoting resistance between the front and rear chassis 4, 6 affects the driving stability of the articulated vehicle 2, such control of the pivoting resistance is an important aspect of vehicle safety in an articulated vehicle.

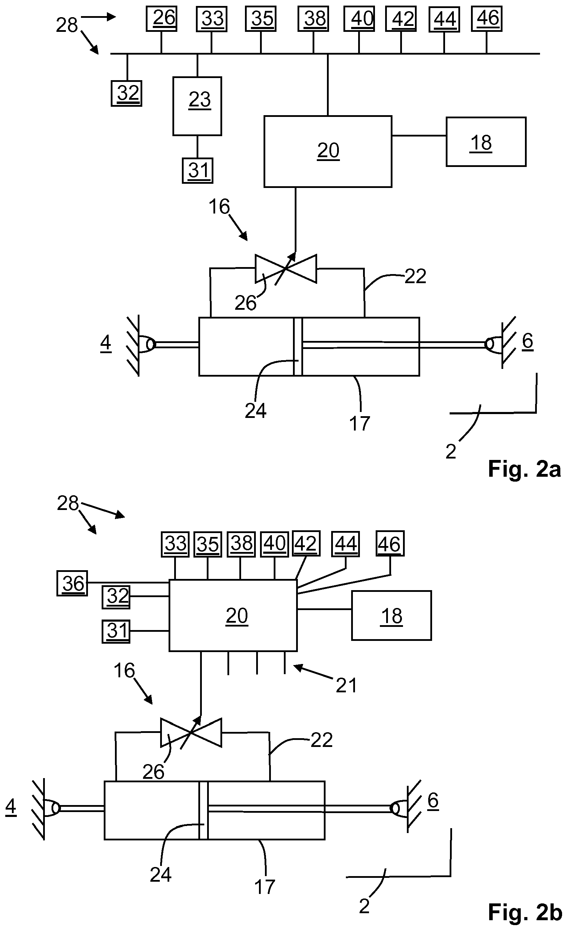

The damping device 16, the first angle measuring arrangement 18, the control unit 20, and further features of a system for the control of the damping resistance of the damping device 16 and the pivoting resistance between the front and rear chassis 4, 6 of the articulated vehicle 2 will be discussed in more detail with reference to **Figs. 2a and 2b****.**

Each one of **Figs. 2a and 2b** schematically illustrates the main components of embodiments of a system for the control of the pivoting resistance between the front and rear chassis 4, 6 of the articulated vehicle 2 discussed above with reference to **Figs. 1a and 1b****.**

Initially, reference is made to both **Figs. 2a and 2b****.** The damping device 16 is connected between the front chassis 4 and the rear chassis 6. The damping device 16 comprises a hydraulic cylinder 17 and a control valve 26 connected to an outlet for hydraulic fluid from the hydraulic cylinder 17. A damping resistance of the damping device 16 is controlled by adjusting a flow area within the control valve 26.

More specifically, in these embodiments the damping device 16 comprises a double-acting hydraulic cylinder 17, which is shown in a schematic cross section. One end of the double-acting hydraulic cylinder 17 is connected to the front chassis 4 and the other end of the double-acting hydraulic cylinder 17 is connected to the rear chassis 6. A conduit 22 connects each end of the double-acting hydraulic cylinder 17 for transfer of hydraulic fluid between a retraction side and an extension side of a piston 24 of the double-acting hydraulic cylinder 17.

Pivoting motions between the front and rear chassis 4, 6 move the piston 24 back and within the hydraulic cylinder 17 thus, providing the hydraulic pressure required for transferring the hydraulic fluid between the retraction and extension sides.

The control valve 26 is arranged in the conduit 22. Thus, by adjusting the flow area of control valve 26 the flow of hydraulic fluid between the retraction and extension sides, and accordingly the damping resistance of the double-acting hydraulic cylinder 17, may be controlled. A small flow area within the control valve 26 provides a large damping resistance and a large flow area within the control valve 26 provides a small damping resistance.

As indicated in **Fig. 1b****,** the damping device may comprise a further hydraulic cylinder 17'. The further hydraulic cylinder 17' may be controlled by the control unit 20. Alternatively, the further hydraulic cylinder 17' may be controlled by a different control unit.

The present invention is not limited to the damping device 16 discussed in connection with **Figs. 2a and 2b****.** For instance, the conduit 22 may comprise a buffer tank for hydraulic fluid. Each of the retraction and extension sides of the hydraulic cylinder 17 may comprise a dedicated inlet for hydraulic fluid and a dedicated outlet for hydraulic fluid, the control valve 26 being connected to the dedicated outlets. Alternatively, the damping device may be a damping device as disclosed e.g. in EP 1010608, or any other kind of suitable damping device, the damping resistance of which can be controlled.

As mentioned above, the articulated vehicle 2 comprises a first angle measuring arrangement 18 and a control unit 20. The first angle measuring arrangement 18 is configured for determining first measurement data, i.e. data related to an angle between the front and rear chassis 4, 6. The first measurement data may be angular data as such, e.g. an angel or an angular velocity, or data representing corresponding angular data, e.g. a voltage level. Under normal operating conditions of the articulated vehicle 2, the first measurement data are utilised by the control unit 20 to control the damping resistance of the damping device 16.

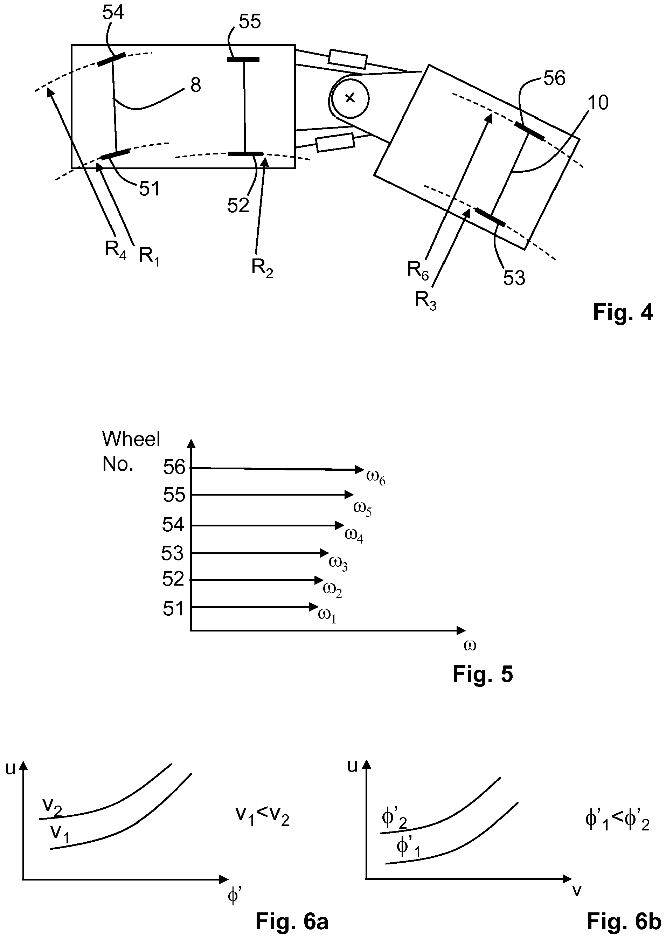

The control unit 20 is configured to receive the first measurement data or a representation of the first measurement data. A first input signal to the control unit 20 may comprise the first measurement data, or the first input signal may form a representation of the first measurement data. The control unit 20 is configured to control the damping device 16 based on the first measurement data. See further below with reference to **Figs. 6a and 6b****.**

The control unit 20 is connected to the damping device 16, in these embodiments to the control valve 26, for controlling the damping device 16. For instance, a PWM (Pulse Width Modulation) signal from the control unit 20 may control the size of the flow area of the control valve 26.

According to a first example: The first measurement data may be, or may relate to, a voltage reading provided by the first angle measuring arrangement 18 and corresponding to a relevant angle between the front and rear chassis 4, 6. The control unit 20 may be configured to calculate the relevant angle based on the voltage reading. Mentioned purely as an example, the first angle measuring arrangement 18 may provide a voltage within a range of 0.25 - 4.75 V, the voltage level corresponding directly to an angle between the front and rear chassis 4, 6.

The control unit 20 may be configured to calculate the angular velocity between the front and rear chassis 4, 6 based on continuous voltage readings or contiguous intermittent voltage readings of the first angle measuring arrangement 18. The calculations of the control unit 20 are utilised for controlling the damping device 16.

Accordingly, the first angle measuring arrangement 18 may comprise an articulation angle sensor 19. The first measurement data may represent at least one of an angle, an angular velocity, and/or an angular acceleration.

According to a second example: The first angle measuring arrangement 18 may comprise a calculation unit which is able to calculate angular data, e.g. an angle between the front and rear chassis 4, 6, and/or an angular velocity between the front and rear chassis 4, 6, and/or an angular acceleration between the front and rear chassis 4, 6. Thus, the first measurement data may comprise actual angle data, and/or actual angular velocity data, and/or actual angular acceleration data, which is/are received by the control unit 20. The actual angle data, and/or the actual angular velocity data, and/or the actual angular acceleration data are utilised by the control unit 20 for controlling the damping device 16.

The articulated vehicle 2 comprises a second angle measuring arrangement 28 configured for determining second measurement data. The second angle measuring arrangement 28 is separate from the first angle measuring arrangement 18. That is, the second measurement data is determined by the second angle measuring arrangement 28 independently of the first angle measuring arrangement 18. A second input signal to the control unit 20 may comprise the second measurement data, or the second input signal may form a representation of the second measurement data. The control unit 20 is configured to control the damping device 16 based on the second measurement data.

The second angle measuring arrangement 28 comprises one or more of various kinds of sensors aboard the articulated vehicle 2. The second angle measuring arrangement 28 is intended to be used in case of failure of the first angle measuring arrangement 18, and failure of any other articulation angle sensor, for controlling the damping device 16. The second angle measuring arrangement 28 as such, or parts thereof, may primarily be utilised for other purposes than the control of the damping device 16. However, for the purpose of controlling the damping between the front and rear chassis 4, 6 in case of failure of the first angle measuring arrangement 18, measurement data from one or more of the various other sensors may form the second measurement data. Accordingly, in this context the one or more various other sensors form part of the second angle measuring arrangement 28.

The second measurement data may not be angular data as such, in particular not angular data between the front and rear chassis 4, 6. Instead the second measurement data is other measurement data, which can be used for calculating angular data between the front and rear chassis 4, 6. Calculation of the angular data based on the second measurement data is performed by the control unit 20.

Since the second angle measuring arrangement 28 is separate from the first angle measuring arrangement 18 and the control unit 20 is configured to control the damping device 16 based on the second measurement data, failure of the first angle measuring arrangement 18 does not affect the second angle measuring arrangement 28. Thus, redundancy for controlling the damping device 16 is provided by the second angle measuring arrangement 28. Accordingly, the articulated vehicle 2 may be driven despite the first angle measuring arrangement 18 being faulty.

The control unit 20 comprises a calculation unit which may take the form of substantially any suitable type of processor circuit or microcomputer. The control unit 20 comprises a memory unit. The calculation unit is connected to the memory unit, which provides the calculation unit with, for example, stored programme code and/or stored data which the calculation unit needs to enable it to do calculations. The calculation unit may also be adapted to store partial or final results of calculations in the memory unit.

In the embodiments of **Fig. 2a****,** a distributed control system of the articulated vehicle 2 is shown. Different electronic units of the control system are connected to each other via an electronic communication bus. The different electronic units accordingly, may communicate with each other via the bus. The electronic communication bus may have a bus architecture such as a CAN (Controller Area Network) bus. The different electronic units include a number of ECU:s (Electronic Control Unit), or nodes, which are connected to the electronic communication bus. Each ECU is configured for controlling one subsystem, or a limited number of related subsystems, of the articulated vehicle 2. Each ECU sends and/or receives data via the electronic communication bus. Each ECU may be configured to calculate data, e.g. based on sensors connected to the ECU. Accordingly, data calculated by one ECU is accessible to all other ECU:s connected to the electronic communication bus.

The control unit 20 forms an ECU connected to the electronic communication bus. The first angle measuring arrangement 18 is connected to the electronic communication bus via the control unit 20. The control unit 20 forms part of a subsystem for controlling the damping between the front and rear chassis 4, 6. In **Fig. 2a** one further ECU 23 has been indicated. However, also the other electronic units connected to the electronic communication bus are connected via ECU:s to the communication bus, although not shown in **Fig. 2a****.**

One or more different sensors of the second angle measuring arrangement 28 are connected to the electronic communication bus via corresponding ECU:s. Each of the ECU:s of the second angle measuring arrangement 28 is configured to process input and/or data from one or more sensors.

In the embodiments of **Fig. 2b** a more centralised control system of the articulated vehicle 2 is shown. Different electronic units of the control system are connected to one ECU. The ECU is configured to control a number of different subsystems within the articulated vehicle 2. In comparison with an ECU of the embodiments shown in **Fig. 2a****,** an ECU of the embodiments of **Fig. 2b** may be configured to control a larger number of subsystems. The ECU may even be configured to control all subsystems of the articulated vehicle 2.

The control unit 20 forms an ECU for the control of a number of subsystems. One subsystem is the control of the damping between the front and rear chassis 4, 6. Other subsystems are indicated by the connectors 21.

One or more different sensors of the second angle measuring arrangement 28 are connected to the control unit 20. Accordingly, the control unit 20 is configured to process input and/or data from the one or more different sensors.

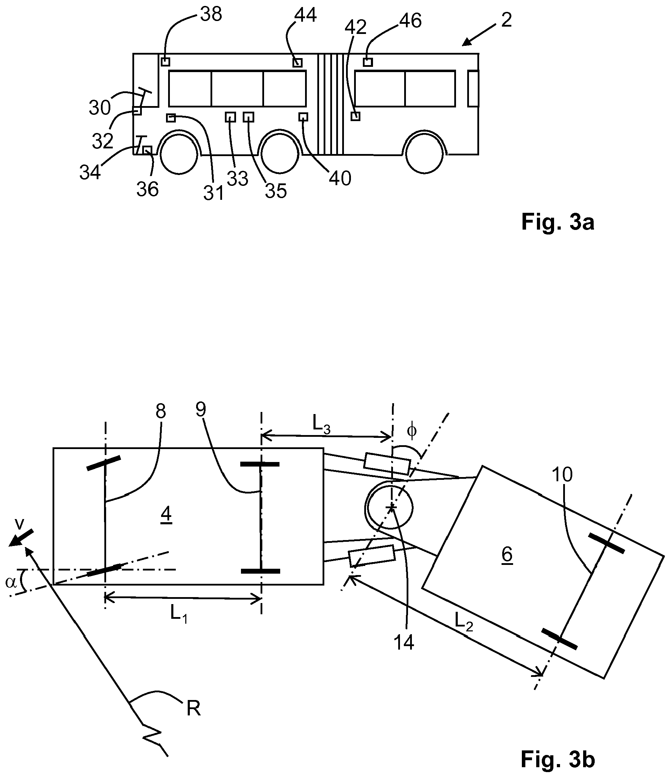

**Figs. 3a and 3b** illustrate the articulated vehicle 2 of the embodiments of **Figs. 1a - 2b****.** **Fig. 4** illustrates parameters of the articulated vehicle 2 when turning. **Fig. 5** shows a diagram of wheel speeds of the articulated vehicle 2.

With reference to **Figs. 2a - 5** various embodiments of the second angle measuring arrangement 28 and the second measurement data will be discussed in the following.

The second angle measuring arrangement 28 may be configured to determine the second measurement data in the form of at least one of:
- a steering wheel angle of the articulated vehicle 2,
- a speed v of the articulated vehicle 2,
- an accelerator pedal position of the articulated vehicle 2,
- a wheel speed of a wheel 51 - 56 of the articulated vehicle 2,
- GPS data from a GPS receiver 38 of the articulated vehicle 2,
- acceleration data from an accelerometer 40, 42 of the articulated vehicle 2, and/or
- image data from an image capturing device 44, 46 of the articulated vehicle 2.

Accordingly, the second measurement data forms part of an indirect representation of e.g. an angle, an angular velocity, and/or an angular acceleration between the front and rear chassis 4,6.

Generally, the control unit 20 may be configured to calculate or determine the angular velocity and/or the angular acceleration between the front and rear chassis 4, 6 based on the angle between the front and rear chassis 4, 6. For instance, continuous angle values or contiguous or intermittent angle values determined by the control unit 20 based on the second measurement data may be utilised for calculating the angular velocity and/or the angular acceleration. A derivative of a function of the angle between the front and rear chassis 4, 6 may be utilised for determining the angular velocity. Similarly, a derivative of a function of the angular velocity may be utilised for determining the angular acceleration.

For instance, with reference to **Figs. 2a** - **3b****,** the steering wheel angle of a steering wheel 30 of the articulated vehicle 2 may be determined by a steering wheel angle sensor 32. Depending on the speed v of the articulated vehicle 2, the articulated vehicle 2 will turn with a turning radius R. The turning radius R corresponds to an angle φ between the front and rear chassis 4, 6. The speed v may be determined e.g. by a speedometer 31 of the articulated vehicle 2. Accordingly, the steering wheel angle sensor 32 and the speedometer 31 form part of the second angle measuring arrangement 28 of these embodiments. The steering wheel angle and the speed v form second measurement data in these embodiments. For instance, a lookup table in the control unit 20 may be utilised for determining the angle φ based on the steering wheel angle and the speed v.

Alternatively, the speed v of the articulated vehicle 2 may be determined by the accelerator pedal position of an accelerator pedal 34 of the articulated vehicle 2 in conjunction with knowledge about engine speed and transmission ratio of the articulated vehicle 2. The accelerator pedal position is determined by an accelerator pedal sensor 36. In this case the accelerator pedal sensor 36, an engine speed sensor 33, and a transmission control unit 35 form part of the second angle measuring arrangement 28. The accelerator pedal position, the engine speed, and the transmission ratio form second measurement data.

According to a further example, again with reference to **Figs. 2a** - **3b****,** the speed v and GPS data are utilised as second measurement data. Utilising the GPS receiver 38, map data, and an itinerary of the articulated vehicle 2, a current position of the articulated vehicle 2 may be determined. The speed v of the articulated vehicle 2 and the curvature of the road the articulated vehicle 2 is following, known from the map data, will provide the current angle φ, and/or the current angular speed, and/or the current angular acceleration between the front and rear chassis 4, 6. Accordingly, a speedometer 31 of the articulated vehicle 2 and the GPS receiver 38 may form part of the second angle measuring arrangement 28. Alternatively, an accelerator pedal sensor 36, an engine speed sensor 33, a transmission control unit 35, and the GPS receiver 38 may form part of the second angle measuring arrangement 28.

According to some embodiments, the second measurement data may be utilised together with vehicle geometry of the articulated vehicle 2 for determining an articulation angle between the front chassis 4 and the rear chassis 6.

Relevant vehicle geometry for determining the angle φ between the front and rear chassis 4, 6, depends on how the articulated vehicle 2 is built. In the embodiments of **Figs. 3a and 3b****,** and as shown in **Fig. 3b****,** the vehicle geometry may relate to a distance L1 between wheel axes 8, 9 of the articulated vehicle 2, distances L2, L3 between wheel axes 9, 10 and a pivot point of the pivotable joint 14.

According to some embodiments, the vehicle geometry of the articulated vehicle 2 may be utilised for calculating a radius quotient between a turning radius of the front chassis 4 and a turning radius of the rear chassis 6. For each angle between front and rear chassis 4, 6 a radius quotient may be calculated. The different radius quotients may be mapped and provided in a lookup table in the control unit 20.

Thus, turning radiuses of the front and rear chassis 4, 6, established utilising the second measurement data, provide a radius quotient, which via the lookup table provides an angle between the front and rear chassis 4, 6.

According to embodiments, with reference to **Figs. 2a - 5****,** the control unit 20 may be configured to control the damping device 16 based on vehicle geometry and second measurement data in the form of:
- a wheel speed of a wheel 51 of the first wheel axis 8, and
- a wheel speed of a wheel 53 of the second wheel axis 10.

More specifically, if the articulated vehicle 2 is travelling straight ahead, all wheels 51 - 56 of the of the articulated vehicle 2 will have substantially the same wheel speed, provided all wheels have the same diameter. However, if the articulated vehicle 2 is travelling along a curve, each wheel 51 - 56 will travel along a different circle path, and each circle path will have a different radius. Accordingly, each wheel 51 - 56 may have a different wheel speed, e.g. as schematically indicated in **Fig. 5****.** The wheel speeds of the wheels 51 - 56 may be measured, e.g. as rotational speeds ω₁ - ω₆. With knowledge about the vehicle geometry, the control unit 20 may calculate the angle φ based on the difference in wheel speeds between the wheels 51, 53 of the first and second wheel axes 8, 10 and the corresponding difference in circle path length, or difference in turning radius R₁, R₃, see **Fig. 4****.** The radius quotient as discussed above may be used for determining the angle φ between the front and rear chassis 4, 6. In calculating the turning radius R₁ - R₆, of one or more of the wheels 51 - 56, the assumption may be made that all turning radiuses meet in one point, i.e. one point about which all wheels 51 - 56 turn.

According to embodiments, with reference to **Figs. 2a - 4****,** the control unit 20 may be configured to control the damping device 16 based on vehicle geometry and second measurement data in the form of:
- the steering wheel angle of the articulated vehicle 2, and
- the speed v of the articulated vehicle 2.

More specifically, the steering wheel angle of a steering wheel 30 may be determined by the steering wheel angle sensor 32. The steering wheel angle correlates with the turning angle α of the wheels of the first axis 8. Depending on the speed v of the articulated vehicle 2, the articulated vehicle 2 will turn with a turning radius R for a particular turning angle α of the wheels of the first axis 8. As mentioned above with reference to **Fig. 4****,** the wheels 51 - 56 of the articulated vehicle 2 will turn with different turning radiuses R₁ - R₆. Again, the speed v may be determined e.g. by a speedometer 31, or accelerator pedal position in conjunction with knowledge about engine speed and transmission ratio. An algorithm in the control unit 20 may estimate the angle φ between the front and rear chassis 4, 6 at a point in time t(k) given the measurements of steering wheel angle and the speed v of the articulated vehicle 2 at a point in time t(k-1). The algorithm is based on the hypothesis that the rear chassis 6 will turn about the same point as the front chassis 4, but at a different curve radius, as discussed above with reference to **Fig. 4****.**

According to embodiments, with reference to **Figs. 2a** - **4****,** the control unit 20 may be configured to control the damping device 16 based on vehicle geometry and second measurement data in the form of:
- the image data.

More specifically, one or more image capturing devices 44, 46, such as e.g. a camera, a radar, or a lidar of the articulated vehicle 2 may provide image data. The image capturing device 44 may be mounted on the front chassis 4 with a view of the rear chassis 6, and/or the image capturing device may be mounted on the rear chassis 6 with a view of the front chassis 4. Depending on how much of an image captured by the image capturing device 44, 46 is covered by the front and/or rear chassis 4, 6, and with knowledge about the vehicle geometry, such as the length of the front and rear chassis 4, 6 and the position of the image capturing device 44, 46 in relation to the pivotable joint 14, the angle φ based can be determined.

According to a further example, again with reference to **Figs. 2a** - **3b****,** the control unit 20 may be configured to control the damping device 16 based on vehicle geometry and second measurement data in the form of:
- the acceleration data from an accelerometer 40 mounted in the front chassis4, and
- the acceleration data from an accelerometer 42 mounted in the rear chassis 6.

The accelerometers 40, 42 measure the lateral acceleration of the front chassis 4 and the rear chassis 6, respectively. As the articulated vehicle 2 is turning, for each of the front and rear chassis 4, 6 a turning radius R may be calculated based on R = v² / a, where v is the vehicle speed and a is the lateral acceleration of the relevant chassis 4, 6. Thus, one turning radius for the front chassis 4 and one turning radius for the rear chassis 6 may be calculated. Again, e.g. the quotient between the turning radiuses may be used for determining the angle φ between the front and rear chassis 4, 6.

The above discussed examples and embodiments are some examples of second angle measurement arrangements 28 and second measurement data. Accordingly, the second angle measurement arrangement 28 may comprise other combinations of sensors than the combinations discussed above. Moreover, the control unit 20 may utilise other combinations of second measurement data for determining angular data between the front and rear chassis 4, 6.

According to some embodiments, two or more of the above discussed ways of determining angular data between the front and rear chassis 4, 6 may be used, each leading to two or more particular angular data results. An average of these particular angular data results may be utilised by the control unit 20 for controlling the damping device 16.

**Figs. 6a and 6b** illustrate schematic diagrams of an example control signal u provided by the control unit 16 for control of the damping device 16 of the articulated vehicle 2, discussed above with reference to **Figs. 1a - 5****.** An increased in the control signal u provides an increase in the damping resistance provided by the damping device 16. The control signal u is a function of both the angular velocity φ' between the front and rear chassis 4, 6 and the vehicle speed v of the articulated vehicle 2, u = f(φ', v). The control unit 20 is configured to calculate, and/or map, the control signal u sent to the damping device based on the vehicle speed v and the angular velocity φ' as determined utilising the first measurement data or the second measurement data.

**Fig. 6a** shows the control signal u in relation to the angular velocity φ' between the front and rear chassis 4, 6 of the articulated vehicle 2. An increase in the angular velocity φ' leads to an increase in the control signal u. The graphs v1 and v2 in **Fig. 6a** represent particular vehicle speeds. Accordingly, at a particular vehicle speed v1, v2, the control signal u sent to the damping device 16 depends on the angular velocity φ' as shown by the relevant graph. **Fig. 6b** shows the control signal u in relation to the vehicle speed v of the articulated vehicle 2. An increase in the vehicle speed v leads to an increase in the control signal u. The graphs φ'1 and φ'2 in **Fig. 6b** represent particular angular velocities. Accordingly, at a particular angular velocity φ'1, φ'2, the control signal u sent to the damping device 16 depends on the vehicle speed v as shown by the relevant graph.

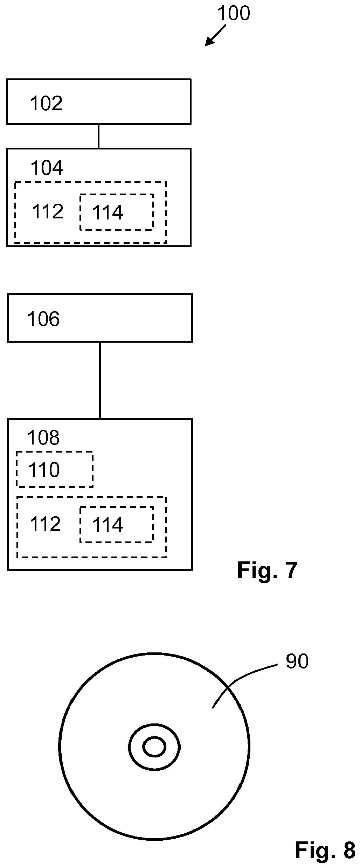

**Fig. 7** illustrates embodiments of a method 100 for controlling a damping device 16 of an articulated vehicle 2. The articulated vehicle may be an articulated vehicle 2 as discussed above in connection with any one of **Figs. 1a - 5****.** Thus, in the following reference is also made to **Figs. 1a - 5****.**

Accordingly, the articulated vehicle 2 comprising a front chassis 4 comprising a first wheel axis 8, a rear chassis 6 comprising a second wheel axis 10, a first angle measuring arrangement 18, and a second angle measuring arrangement 28.

The method 100 comprises steps of:
- determining 102 first measurement data utilising the first angle measuring arrangement 18, and
- controlling 104 the damping device 16 based on the first measurement data. This relates to a normal operation of the damping device 16, i.e. when the first angle measuring arrangement 18 functions properly.

In the event of failure of the first angle measuring arrangement 18, the method 100 provides for performing steps of:
- determining 106 second measurement data utilising the second angle measuring arrangement 28, and
- controlling 108 the damping device 16 based on the second measurement data.

Accordingly, control of the damping device 16 and a possibility to drive the articulated vehicle 2 despite rupture of the first angle measuring arrangement 18 is provided by the method 100.

Above, into alia with reference to **Figs. 2a - 5****,** a number of different solutions for controlling the damping device 16 based on the second measurement data are discussed.

According to embodiments, in the method 100, the first measurement data may comprise at least one of an angle, an angular velocity, and/or an angular acceleration.

According to embodiments, in the method 100, the second measurement data may comprise at least one of:
a steering wheel angle of the articulated vehicle 2,
a speed of the articulated vehicle 2,
an accelerator pedal position of the articulated vehicle 2,
a wheel speed of a wheel of the articulated vehicle 2,
GPS data from a GPS receiver 38 of the articulated vehicle 2,
acceleration data from an accelerometer 40, 42 of the articulated vehicle 2, and/or
image data from an image capturing device 44, 46 of the articulated vehicle 2.

According to embodiments, in the method 100, the step of controlling 108 the damping device 16 based on the second measurement data may comprise a step of:
determining 110 an articulation angle between the front chassis 4 and the rear chassis 6 based on the second measurement data and vehicle geometry of the articulated vehicle 2.

According to embodiments, in the method 100, each of the steps of controlling 104, 108 the damping device 16 may comprise a step of:
- controlling 112 a damping resistance of the damping device.

According to embodiments, in the method 100, the damping device 16 may comprise a hydraulic cylinder 17 and a control valve 26 connected to an outlet for hydraulic fluid from the hydraulic cylinder 17, and wherein the step of controlling 112 a damping resistance of the damping device may comprise a step of:
- adjusting 114 a flow area within the control valve 16.

One skilled in the art will appreciate that the method 100 for controlling a damping device of an articulated vehicle may be implemented by programmed instructions. These programmed instructions are typically constituted by a computer program, which, when it is executed in a computer or control unit, ensures that the computer or control unit carries out the desired control, such as the method steps 102 - 114. The computer program is usually part of a computer programme product which comprises a suitable digital storage medium on which the computer program is stored.

**Fig. 8** illustrates a computer-readable storage medium 90 in the form of CD-ROM disc. The computer-readable storage medium 90 comprises instructions which, when executed by a computer, cause the computer to carry out the steps of the method 100.

The computer program product 90 may be provided for instance in the form of a data carrier carrying computer program code for performing at least some of the steps 102 - 114 according to some embodiments when being loaded into the one or more calculation units of the control unit 20. The data carrier may be, e.g. a ROM (read-only memory), a PROM (programable read-only memory), an EPROM (erasable PROM), a flash memory, an EEPROM (electrically erasable PROM), a hard disc, a CD ROM disc (as shown in **Fig. 8**), a memory stick, an optical storage device, a magnetic storage device or any other appropriate medium such as a disk or tape that may hold machine readable data in a non-transitory manner. The computer program product may furthermore be provided as computer program code on a server and may be downloaded to the control unit 20 remotely, e.g., over an Internet or an intranet connection, or via other wired or wireless communication systems.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims. The present invention is not limited to damping devices comprising double-acting hydraulic cylinders, but may be utilised with any kind of damping device suitable for regulating the pivoting resistance between the front and rear chassis of an articulated vehicle.

## Claims

1. An articulated vehicle (2) comprising a front chassis (4) comprising a first wheel axis (8), a rear chassis (6) comprising a second wheel axis (10), a damping device (16), a first angle measuring arrangement (18), and a control unit (20), wherein
the front chassis (4) is pivotably connected to the rear chassis (6), wherein
the damping device (16) is connected between the front and rear chassis (4, 6), wherein
the first angle measuring arrangement (18) is configured for determining first measurement data, wherein
the control unit (20) is configured to control the damping device (16) based on the first measurement data,
**characterised in that**
the articulated vehicle (2) comprises a second angle measuring arrangement (28) configured for determining second measurement data, wherein
the second angle measuring arrangement (28) is separate from the first angle measuring arrangement (18), and wherein
the control unit (20) is configured to control the damping device (16) based on the second measurement data.

2. The articulated vehicle (2) according to claim 1, wherein the first angle measuring arrangement (18) comprises an articulation angle sensor (19), and wherein the first measurement data comprises at least one of an angle, an angular velocity, and/or an angular acceleration.

3. The articulated vehicle (2) according to claim 1 or 2, wherein the second angle measuring arrangement (28) is configured to determine the second measurement data in the form of at least one of:
a steering wheel angle of the articulated vehicle (2),
a speed (v) of the articulated vehicle (2),
an accelerator pedal position of the articulated vehicle (2),
a wheel speed of a wheel of the articulated vehicle (2),
GPS data from a GPS receiver (38) of the articulated vehicle (2),
acceleration data from an accelerometer (40, 42) of the articulated vehicle (2), and/or
image data from an image capturing device (44, 46) of the articulated vehicle (2).

4. The articulated vehicle (2) according to any one of the preceding claims, wherein the second measurement data is utilised together with vehicle geometry of the articulated vehicle (2) for determining an articulation angle between the front chassis (4) and the rear chassis (6).

5. The articulated vehicle (2) according to any one of the preceding claims, wherein the control unit (20) is configured to control a damping resistance of the damping device (16).

6. The articulated vehicle (2) according to any one of the preceding claims, wherein the damping device (16) comprises a hydraulic cylinder (17) and a control valve (26) connected to an outlet for hydraulic fluid from the hydraulic cylinder (17), and wherein a damping resistance of the damping device (16) is controlled by adjusting a flow area within the control valve (26).

7. The articulated vehicle (2) according to claims 3 and 4, wherein the control unit (20) is configured to control the damping device (16) based on vehicle geometry and second measurement data in the form of:
- a wheel speed of a wheel (51, 52) of the first wheel axis (8), and
- a wheel speed of a wheel (55, 56) of the second wheel axis (10).

8. The articulated vehicle (2) according to claims 3 and 4, wherein the control unit (20) is configured to control the damping device (16) based on vehicle geometry and second measurement data in the form of:
- the steering wheel angle of the articulated vehicle (2), and
- the speed (v) of the articulated vehicle (2).

9. The articulated vehicle (2) according to claims 3 and 4, wherein the control unit (20) is configured to control the damping device (16) based on vehicle geometry and second measurement data in the form of:
- the image data.

10. The articulated vehicle (2) according to claim 3, wherein the control unit (20) is configured to control the damping device (16) based on vehicle geometry and second measurement data in the form of:
- the acceleration data from an accelerometer (40) mounted in the front chassis (4)
- the acceleration data from an accelerometer (42) mounted in the rear chassis (6).

11. A method (100) for controlling a damping device (16) of an articulated vehicle (2), the articulated vehicle (2) comprising a front chassis (4) comprising a first wheel axis, a rear chassis (6) comprising a second wheel axis, a first angle measuring arrangement (18), and a second angle measuring arrangement (28), wherein the front chassis (4) is pivotably connected to the rear chassis (6), wherein the damping device (16) is connected between the front and rear chassis (4, 6), wherein the second angle measuring arrangement (28) is separate from the first angle measuring arrangement (18), and wherein the method (100) comprises steps of:
- determining (102) first measurement data utilising the first angle measuring arrangement (18),
- controlling (104) the damping device (16) based on the first measurement data, and in the event of failure of the first angle measuring arrangement (18), performing steps of:
- determining (106) second measurement data utilising the second angle measuring arrangement (28), and
- controlling (108) the damping device (16) based on the second measurement data.

12. The method (100) according to claim 11 wherein the first measurement data comprises at least one of an angle, an angular velocity, and/or an angular acceleration.

13. The method (100) according to claim 11 or 12, wherein the second measurement data comprises at least one of:
a steering wheel angle of the articulated vehicle (2),
a speed (v) of the articulated vehicle (2),
an accelerator pedal position of the articulated vehicle (2),
a wheel speed of a wheel (51, 52, 53, 54, 55, 56) of the articulated vehicle (2),
GPS data from a GPS receiver (38) of the articulated vehicle (2),
acceleration data from an accelerometer (40, 42) of the articulated vehicle (2), and/or
image data from an image capturing device (44, 46) of the articulated vehicle (2).

14. The method (100) according to any one of claims 11 - 13, wherein the step of controlling (108) the damping device (16) based on the second measurement data comprises a step of: - determining (110) an articulation angle between the front chassis (4) and the rear chassis (6) based on the second measurement data and vehicle geometry of the articulated vehicle (2).

15. The method (100) according to any one of claims 11 - 14, wherein each of the steps of controlling (104, 108) the damping device (16) comprises a step of:
- controlling (112) a damping resistance of the damping device (16).

16. The method (100) according to claim 15, wherein the damping device (16) comprises a hydraulic cylinder (17) and a control valve (26) connected to an outlet for hydraulic fluid from the hydraulic cylinder (17), and wherein the step of controlling (112) a damping resistance of the damping device (16) comprises a step of:
- adjusting (114) a flow area within the control valve (26).

17. A computer program comprising instructions which, when the program is executed by a computer, cause the computer to carry out the steps of the method (100) according to any one of claims 11 - 16.

18. A computer-readable storage medium (90) comprising instructions which, when executed by a computer, cause the computer to carry out the steps of the method (100) according to any one of claims 11 - 16.
